# EUROPÄISCHE PATENTSCHRIFT

(11) **EP 1 050 920 B1**
(45) Veröffentlichungstag und Bekanntmachung des Hinweises auf die Patenterteilung: **05.10.2005**
(21) Anmeldenummer: 00108958.0
(22) Anmeldetag: 27.04.2000
(51) Int. Cl.: H01Q 1/24, H04N 7/20

(54) **Quatro-Konverter**
Converter with four outputs
Convertisseur à quatre sorties

(30) Priorität: 06.05.1999 DE 29908092 U
(43) Veröffentlichungstag der Anmeldung: 08.11.2000
(73) Patentinhaber: Kathrein Werke KG, 83022 Rosenheim (DE)
(72) Erfinder: Exler, Ralf, 83059 Kolbermoor (DE); Linke, Christian, 83404 Ainring (DE); Huber, Manfred, 83556 Griesstätt (DE)
(74) Vertreter: Flach, Dieter Rolf Paul

(56) Entgegenhaltungen:
- EP-A- 1 076 457
- DE-A- 19 728 623
- SCHMEDT K ET AL: "KASKADIER-FÄHIGER MULTISWITCH" RADIO FERNSEHEN ELEKTRONIK, VEB VERLAG TECHNIK. BERLIN, DE, Bd. 43, Nr. 3, 1. März 1994 (1994-03-01), Seiten 22-23, XP000478260 ISSN: 1436-1574
- HOFMEIR S: "SAT-ANLAGEN DIGITAL AUFRUESTEN" FUNKSCHAU, FRANZIS-VERLAG K.G. MUNCHEN, DE, Bd. 71, Nr. 4, 6. Februar 1998 (1998-02-06), Seiten 50-53, XP000767872 ISSN: 0016-2841
- JUNGK K: "DIGITALER SAT-EMPFANG" RADIO FERNSEHEN ELEKTRONIK, VEB VERLAG TECHNIK. BERLIN, DE, Bd. 45, Nr. 8, 1. August 1996 (1996-08-01), Seiten 26-27, XP000623889 ISSN: 1436-1574
- FABIAN R: "MARKTÜBERSICHT: MULTISCHALTER TEIL 1" RADIO FERNSEHEN ELEKTRONIK, VEB VERLAG TECHNIK. BERLIN, DE, Bd. 44, Nr. 11, 1. November 1995 (1995-11-01), Seiten 30-39, XP000547886 ISSN: 1436-1574

## Beschreibung

Die Erfindung betrifft einen Quatro-Konverter nach dem oberbegriff des Anspruchs 1.

Die über einen Satelliten ausgestrahlten Fernseh-Rundfunkprogramme werden mittels horizontaler oder vertikaler Polarisation übertragen. Da zunehmend von mehr Satelliten mehr Programme ausgestrahlt werden, wird dabei auch das zu übertragende Frequenzspektrum zunehmend größer. Von daher umfasst ein sogenannter Quatro-Konverter üblicherweise vier Ausgänge, an denen einmal das horizontale untere Band, das vertikale untere Band, das horizontale höhere Band und das vertikale höhere Band empfangen werden können.

An einem derartigen mit vier festgeschalteten Ausgängen versehenen Quatro-Konverter wird üblicherweise in der Regel eine Umschaltmatrix oder eine Umschaltmatrixkaskade mit mehreren Teilnehmerausgängen angeschlossen. Jeder Teilnehmer kann darüber zwischen einem der vier vorstehend genannten Bandbereichen wählen und umschalten.

Unabhängig davon bestehen auch einzelne Konverterschaltungen, bei denen nur ein einzelner Empfänger angeschlossen werden kann. Ferner sind auch sogenannte Twin-KonverterSchaltungen bekannt, die es ermöglichen, dass daran zwei Teilnehmer angeschlossen werden können, die unabhängig zwischen dem vertikalen und horizontalen und oberen und unteren Band jeweils umschalten und wahlweise entsprechende Programme empfangen können.

Schließlich gibt es auch sogenannte individuell ansteuerbare Konverterschaltungen für vier Teilnehmer oder bis zu maximal vier Teilnehmern, die teilweise auch als Quad-Konverter bezeichnet werden. Im Gegensatz zu den sogenannten Quatro-Konvertern sind die Quad-Konverter so aufgebaut, dass die maximal vier anschließbaren Teilnehmer individuell und einzeln jeweils über ihren Receiver die von ihnen gewünschte Empfangsebene im Konverter ansteuern können, also beispielsweise zum Empfang des oberen oder unteren Frequenzbandes entweder zum Empfang der vertikal-oder der horizontal polarisierten Programme.

Die Umschaltung derartiger individuell ansteuerbarer Quad-Konverter erfolgt dabei in der Regel in Form einer Umschaltung von 13 Volt auf 18 Volt (13 Volt üblicherweise zum Empfang der vertikalen und 18 Volt beispielsweise zum Empfang der horizontalen Polarisation), wobei durch eine zusätzliche Umschaltung eines Tonsignals von 0 kHz auf 22 kHz eine Umschaltung jeweils vom unteren aufs obere Frequenzband vorgenommen werden kann.

Die zuletzt genannten Konverterschaltungen, also die sogenannte Quad-Konverter, können jedoch nicht durch Zuschaltung von Umschaltmatrizen ausgebaut werden, so dass diese individuell ansteuer- und umsteuerbaren Quad-Konverter nicht so ausgebaut werden können, dass mehr als vier Teilnehmer die von ihnen gewünschten Programme empfangen können.

Ein Quad-Konverter ist grundsätzlich aus der DE 197 28 623 A1 als bekannt zu entnehmen. Sogenannte durch Zuschaltung von weitern Umschaltmatrix-Einrichtungen im Sinne einer Mehrteilnehmer-Empfangsanlage für mehr als vier Teilnehmer ausbaubare Konverterschaltungen unter Verwendung von sogenannten Quatro-Konvertern, die auch Universal-Konverter oder Universal-LNCs genannt werden, ist grundsätzlich aus der Vorveröffentlichung "Jungk, Karsten: Digitaler Sat-Empfang, in Radio, Fernsehen, Elektronik, VEB Verlag Technik, Berlin, DE Bd.45, Nr. 8, 1. August 1996, Seiten 26 bis 27" als bekannt zu entnehmen.

Aufgabe der vorliegenden Erfindung ist es ausgehend von einem vorstehend genannten Quad-Konverter (bei welchem die angeschlossenen Teilnehmer an den einzelnen Ausgängen individuell eine bestimmte Empfangsebene einstellen können) eine Möglichkeit zu schaffen, dass ein derartiger Quad-Konverter auch für eine Mehrbereichs-Empfangsanlage mit mehr als vier Teilnehmer ausbaubar ist.

Die Aufgabe der Erfindung wird gemäß den im Anspruch 1 angegebenen Merkmalen gelöst. Vorteilhafte Ausgestaltungen der Erfindung sind in den Unteransprüchen angegeben.

Der erfindungsgemäße Quatro-Konverter zeichnet sich zum einen dadurch aus, daß eine Umschaltmatrix bereits integriert ist. D.h. daß erfindungsgemäß zumindest an zwei, vorzugsweise aber an allen vier Ausgängen des Quatro-Konverters zwei bis vier Teilnehmer direkt angeschlossen werden können, die jeweils durch Anlegen der oben genannten Steuersignale (14 Volt bzw. 18 Volt, 0 kHz bzw. 22 kHz) zwischen den vier zu empfangenden Ebenen (vertikale bzw. horizontale Polarisation des unteren sowie jeweils oberen Frequenzbandes oder bzgl. eines ersten oder zweiten Satelliten) wählen können.

Daraus ergäbe sich aber die Konsequenz, daß eine Erweiterung der Teilnehmerzahl mit herkömmlichen Umschaltmatrizen nicht mehr möglich ist, da diese die erforderlichen Schaltsignale auf den Stammleitungen nicht führen.

Erfindungsgemäß ist dazu deshalb ferner vorgesehen, daß der Quatro-Konverter bereits zumindest zwei, vorzugsweise vier unabhängige Logikschaltungen umfaßt, die jeweils einen Ausgang auf Nichtvorhandensein einer Schaltspannung überwachen. Steht eine Spannung von 13 Volt oder 18 Volt an, so heißt dies, daß ein entsprechender Teilnehmer direkt zugeschaltet ist, der in bekannter Weise die Umschaltung zwischen den vier zu empfangenden Ebenen vornehmen kann. Wird an dem Eingang jedoch eine Spannung von 0 V detektiert, so wird dies automatisch als eine Mehrteilnehmer-Grundschaltung interpretiert, bei welcher zumindest eine herkömmliche Matrizenschaltung oder sogar eine Kaskadierung mehrerer Matrizenschaltungen vorgenommen werden kann. Durch Anlegen eines Nullvolt-Signals an zumindest drei der vier Ausgänge wird automatisch durch die interne Umschaltlogik eine Umschaltung in eine für den gemeinsamen Mehrteilnehmerbetrieb typische Standard- oder Defaultstellung vorgenommen, damit dem jeweils spezifischen Ausgang eine der vier Empfangsebenen fest zugeordnet wird.

Allein durch Aufstecken eines Kodiersteckers kann die Umschaltung in die Standard- oder Defaultstellung herbeigeführt werden. Dadurch werden drei der vier Ausgänge von jeder Spannungsversorgung bewußt abgekoppelt. Einer der Ausgänge, d.h. beispielsweise der Ausgang, der vorzugsweise auf 18 V / 0 kHz liegt, und der damit auch gleichzeitig von den meisten UmschaltMatrizen für die Konverterschaltung (LNB) zur Verfügung gestellt wird, wird weiterhin auf Durchschaltung geschaltet. Über diesen Ausgang erfolgt die Spannungs- und Stromversorgung der Konverterschaltung.

Mit anderen Worten kann also allein durch Aufsetzen eines Kodiersteckers eine derartige Mehrteilnehmer-Konfiguration erzwungen werden, die es ermöglicht, nunmehr eine oder mehrere Umschaltmatrizen nachzuschalten, und darüber den einzelnen Teilnehmern die vier Empfangsebenen zur Verfügung zu stellen.

Die Erfindung wird nachfolgend anhand eines Ausführungsbeispieles unter Bezugnahme auf die beigefügten Figuren näher erläutert. Dabei zeigen im einzelnen:
- Figur 1:: ein Blockschaltdiagramm zur Verdeutlichung der Schaltung; und
- Figur 2:: eine schematische Darstellung eines auf den Ausgang aufsetzbaren Kodiersteckers, an welchem dann ein oder mehrere Matrizenschaltungen nachgeschaltet werden können.

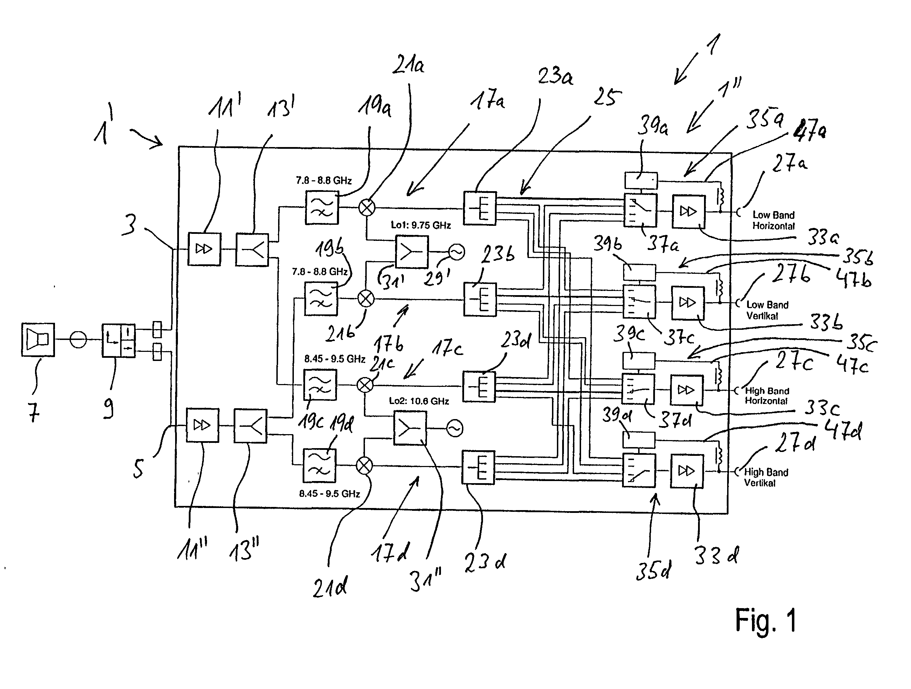

In Figur 1 ist ein Quatro-Konverter 1 gezeigt, der nachfolgend auch kurz als Konverter bezeichnet wird.

Dieser weist zwei Eingangsanschlüsse 3 und 5 auf.

Über ein in Figur 1 angedeutetes Horn 7 und einer nachgeordneten Polarisationsweiche 9 können die horizontal und vertikal empfangenen elektromagnetischen Polarisationen über die beiden Ausgänge der Polarisationsweiche 9 den beiden Eingängen 3 und 5 der Konverterschaltung 1 zugeführt werden.

Jedem der Eingangsanschlüsse 3 und 5 ist eine erste Verstärkerschaltung 11' bzw. 11'', und jeweils eine in der Reihe dazu geschaltete Frequenzweiche 13' bzw. 13'' nachgeordnet.

Über die erste Frequenzweiche 13' erfolgt beispielsweise eine Frequenzaufteilung in ein unteres Frequenzband von 10,7 Ghz bis 11,7 Ghz und ein oberes Frequenzband von 11,7 GHz bis 12,75 GHz.

Entsprechend ist der zweite Eingangszweig mit einer verstärkerschaltung 11'' und einer nachgeordneten Frequenzweiche 13'' aufgebaut, worüber die mittels der vertikalen Polarisationen empfangenen Frequenzen in ein entsprechendes oberes und unteres Frequenzband aufgeteilt werden.

Es entstehen dadurch vier Empfangsebenen für ein unteres horizontales, ein unteres vertikales, ein oberes horizontales und ein oberes vertikales Frequenzband. Nachfolgend wird auch dann beispielsweise von vier Empfangsebenen gesprochen, wenn anstelle der beiden erwähnten oberen Frequenzbänder beispielsweise zwei Frequenzbänder anstehen, die über die vertikale und horizontale Polarisation von einem zweiten Satelliten empfangen werden.

Jeder der den vier Empfangsebenen zugeordneten Zweige 17a bis 17d umfaßt jeweils in Reihe eine Filterschaltung 19a bis 19d sowie eine Mischstufe 21a bis 21d und eine nachfolgende Verzweigerschaltung, wobei jede Verzweigerschaltung 23a bis 23d so aufgebaut ist, daß das an dem einzigen Eingang einstehende Frequenzspektrum über jeweils vier Ausgangsleitungen 25 letztlich den vier Ausgängen 27a bis 27 d zuführbar ist.

Die beiden Mischstufen 21a und 21b für das horizontale wie vertikale untere Frequenzband werden jeweils über einen Lokaloszilloator 29' bzw. 29'' und einer nachfolgenden Verzweigungsschaltung 31',31'' angesteuert, und zwar die Mischstufen 21a und 21b beispielsweise mittels einer Lokaloszillatorfrequenz von 9,75 Ghz.

Für die beiden oberen Frequenzbänder in der dritten und vierten Ebene erfolgt die Ansteuerung der Mischstufen 21c und 21d über einen oberen Lokaloszillator 29'' und die nachfolgende Verzweigungsschaltung 31".

Aus dem erläuterten Aufbau ist auch ersichtlich, daß die Quatro-Konverter 1 zweigegliedert ist und eine Konverterschaltung 1' aufweist, welcher eine eine vier Eingänge und vier Ausgänge aufweisende Verteiler- oder Matrixschaltung 1'' nachgeordnet ist.

Diese Matrixschaltung 1'' umfaßt neben den erwähnten vier Verzweigungsschaltungen 23a bis 23d jeweils eine dem zugehörigen Konverter-Ausgang 27a bis 27d jeweils vorgeordnete weitere Verstärkerstufe 33a bis 33d, wobei jeder dieser vier Verstärkerstufen 33a bis 33d eine Bandbereichsumschalt-Logik 35a bis 35d mit einer entsprechenden Umschalteinrichtung 37a bis 37d und einer jeweils zugeordneten Umschaltlogik 39a bis 39d aufgebaut ist, die über eine Verzweigungsleitung 41 a bis 41 d mit dem jeweiligen Konverterausgang 47a bis 47d in Verbindung steht. Diese Logikschaltungen sind unabhängig voneinander aufgebaut.

Jede der Bandbereichsumschaltung 35a bis 35d, d.h. jede der Umschalteinrichtungen 37a bis 37d weist vier Eingänge auf, von denen jeder der vier Eingänge mit jeweils einem der Ausgänge der vier Verzweigerschaltung 23a bis 23d in Verbindung steht.

Mit einem derartigen Quatro-Konverter können beispielsweise problemlos ein, zwei, drei oder vier direkt zuschaltbare Teilnehmer wahlweise Programme auf allen vier Empfangsebenen empfangen.

Durch Umschaltung von 13 Volt auf 18 Volt bzw. von 0 kHz auf 22 kHz eines Tonträgersignales kann beispielsweise ein am Ausgang 27a angeschlossener erster Teilnehmer die in der nachfolgenden Tabelle in Spalte 2 wiedergegebenen Frequenzbandbereiche der insgesamt vier Empfangsebenen empfangen.

| **Steuersignal** | **Auswertung 1xSat** | **Auswertung 2xSat** |
|---|---|---|
| 13V/0kHz | Vertikal/low | Vertikal/Pos1 |
| 13V/22kHz | Vertikal/high | Vertikal/Pos2 |
| 18V/0KHz | Horizontal/low | Horizontal/Pos1 |
| 18V/22kHz | Horizontal/high | Horizontal/Pos2 |

Sollte nicht eine Aufspaltung in ein sogenanntes oberes und unteres Band erfolgen, sondern werden beispielsweise die vertikalen und horizontalen Polarisationen von zwei unterschiedlichen Satelliten eingangsseitig empfangen, so kann eine Aufspaltung entsprechend der vertikalen und horizontalen Polarisation der ersten Satellitenposition (Pos. 1) und der zweiten Satellitenposition (Pos. 2) vorgenommen werden, wie dies in der dritten Spalte der vorstehenden Tabelle wiedergegeben ist.

Ebenso können die an den weiteren Anschlüssen 47b bis 47d angeschlossenen Teilnehmer jeweils unabhängig voneinander die gewünschen Programme empfangen.

Die Anlage kann aber auch problemlos durch Nachschalten von einer oder mehreren Matrix-Schaltungen so ausgebaut werden, daß mehr als vier Teilnehmer alle vier jeweils möglichen Empfangsebenen empfangen können.

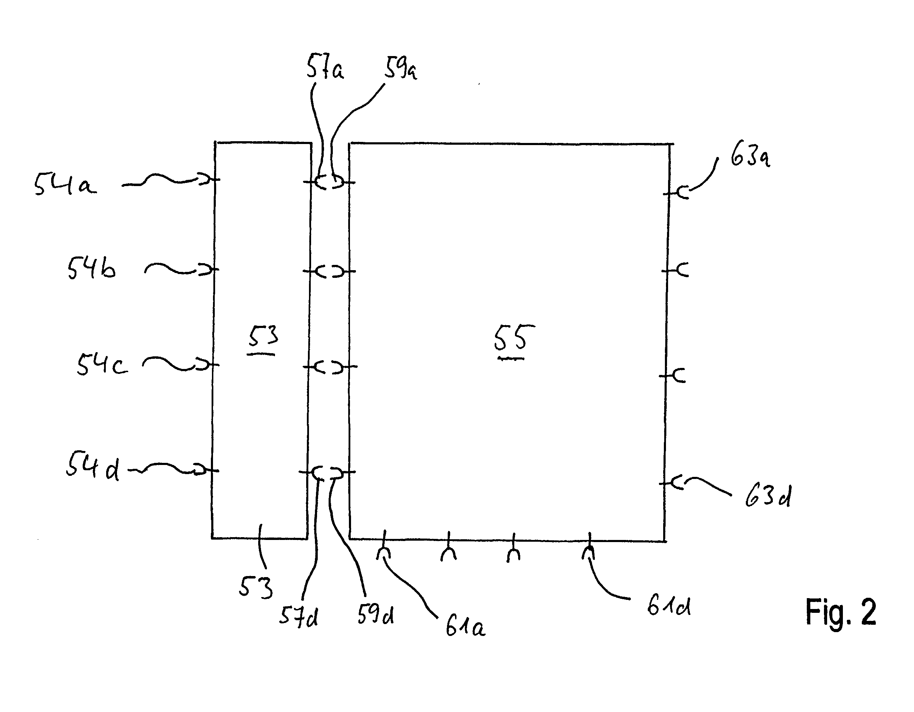

Dazu wird eine der bekannten Umschaltmatrizen mit ihren jeweils vier Eingängen mit den vier Ausgängen 27a bis 27b der Konverterschaltung verbunden, erfindungsgemäß jedoch unter Zwischenschaltung eines in Figur 2 wiedergegebenen Codiersteckers 53, der vier Steckverbinder aufweist.

Der in Figur 2 wiedergegebene Codierstecker 53 bewirkt, daß an drei der vier Konverterausgänge, beispielsweise an den drei Konverterausgeängen 27a bis 27c, keine Spannung mehr anliegen kann, der Spannungseingang also auf 0 Volt gesetzt wird. Dies bewirkt in der vorgesehenen Bereichsbandumschaltung 35a bis 35c bzw. der Umschaltlogik 39a bis 39b, daß die drei entsprechenden Konverterausgänge 27a bis 27c in einen für sie vorgesehenen verschiedenen Grundzustand umgeschaltet werden, der jeweils einer der vier Empfangsebenen entspricht.

Einer der Konverterausgänge, beispielsweise der Konverterausgang 27d (d.h. z.B. vorzugsweise der 18 V / 0 kHz-Konverterausgang), der auch gleichzeitig von den meisten Umschalt-Matrizen als Spannungsversorgung für die Konverterschaltung (LNB-Schaltung) zur Verfügung gestellt wird, ist auf Durchlaß geschaltet. Das 18 V / 0 kHz-Signal bewirkt also bei diesem vierten Ausgang 27d die Umschaltung in den Standard- oder Defaultzustand, wobei hierüber gleichzeitig die Spannungs- oder Stromversorgung der für die Konverterschaltung 1 aufrechterhalten wird. Damit liegen an den vier Ausgängen die vier Empfangsebenen, d.h. z.B. die vier unterschiedlichen Frequenzbandbereiche zwingend und fest eingestellt an.

In Figur 2 ist schematisch der Codierstecker 53 gezeigt, dessen Eingänge 54a bis 54d mit den Ausgängen 27a bis 27d der Konverterschaltung verbunden werden. Die Ausgänge 57a bis 57d dieses Codiersteckers 53 werden mit den entsprechenden Eingängen 59a bis 59d einer nachfolgenden Matrixschaltung 55 verbunden, an den unten beispielsweise die Teilnehmeranschlüsse 61a bis 61d vorgesehen sind. An den in Figur 2 rechts liegenden Ausgängen 63a bis 63d der Matrixschaltung 55 kann dann eine nächste Matrixschaltung mit entsprechenden weiteren Teilnehmeranschlüssen zugeschaltet werden, etc.

## Patentansprüche

1. Quatro-Konverter, zum Empfang von zumindest vier Empfangsebenen, wobei die zu empfangenden vier Empfangsebenen an den vier Konverterausgängen (27a bis 27d) anstehen, und zwar eine Empfangsebene an jeweils einem Konverterausgang (27a bis 27d), mit folgenden Merkmalen:
- der Konverter (1) umfasst eine integrierte Matrixschaltung (1"),
- der Konverter (1) umfasst eine Verzweigungsschaltung (23a bis 23d) und eine Umschalteinrichtung (37a bis 37d), so dass an zumindest zwei oder an allen vier Konverterausgängen (27a bis 27d) zumindest zwei oder vier Teilnehmer individuell und unabhängig durch Umschaltung eines ersten Steuersignals zwischen zwei Versorgungsspannungen (13 Volt bzw. 18 Volt)oder durch Umschaltung eines weiteren frequenzabhängigen Steuerungssignals (0 kHz bzw. 22 kHz) unabhängig von den anderen angeschlossenen Teilnehmern jeweils eine der vier Empfangsebenen wahlweise einstellen und empfangen können,
**gekennzeichnet durch** die folgenden weiteren Merkmale:
- es ist eine Zusatzschaltung vorgesehen, mittels der beim Ausbau zu einer Mehrteilnehmer Empfangskonverterschaltung für mehr als vier Teilnehmer die vier Konverterausgänge (27a bis 27d, 57a bis 57d) zwangsweise in eine Standard-bzw Defaultstellung umgesteuert sind, in der jedem der vier Konverterausgänge (27a bis 27d, 57a bis 57d) jeweils eine bestimmte der vier möglichen Empfangsebenen zugeordnet ist, und
- mittels der Zusatzschaltung sind zumindest eine oder mehrere Umschaltmatrizen (55) mit einer Standard-Zuordnung an ihren vier Eingängen (59a bis 59d) bzw. ihren vier Ausgängen (63a bis 63d) unter Bildung einer Mehrteilnehmer-Empfangskonverterschaltung für mehr als vier Teilnehmer zuschaltbar.

2. Konverterschaltungen nach Anspruch 1, **dadurch gekennzeichnet, dass** die Zusatzschaltung aus einem Codierstecker (53) besteht, dessen vier Eingänge (54a bis 54d) mit den vier Ausgängen (27a bis 27d) des Konverters (1) elektrisch verbunden sind, so dass an den Ausgängen (57a bis 57d) des Codiersteckers (53) entsprechend der Standard-bzw. Defaultstellung jedem der vier Konverterausgänge (57a bis 57d) jeweils eine bestimmte der vier möglichen Empfangsebenen zugeordnet ist, wobei an diesen vier Ausgängen (57a bis 57d) eine Umschaltmatrix (55) anschließbar ist.

3. Konverterschaltungen nach Anspruch 1 oder 2, **dadurch gekennzeichnet, dass** den Konverterausgängen (27a bis 27d) eine Bandbereichsumschalteinrichtung (35a bis 35d) mit einer Umschaltlogik (39a bis 39d) zugeordnet ist, wobei im Standard- bzw. Defaultzustand die Zuordnung der vier Empfangsebenen auf jeweils einen der vier Konverterausgänge (27a bis 27d) bewirkbar ist.

4. Konverterschaltung nach einem der Ansprüche 1 bis 3, **dadurch gekennzeichnet, dass** die Umschaltung in die Standard- oder Defaultstellung im Konverter (1) mechanisch, vorzugsweise mechanisch durch Aufsetzen des Codiersteckers (53) erfolgt.

5. Konverterschaltung nach einem der Ansprüche 1 bis 3, **dadurch gekennzeichnet, daß** die Umschaltung des Konverters (1) in den Standard- bzw. Defaultzustand elektrisch durch Zuführung bzw. Nicht-Anlegen bestimmter Steuerungssignale (Spannungs- und/oder Tonsignale) durchführbar ist.

6. Konverterschaltungen nach einem der Ansprüche 1 bis 5, **dadurch gekennzeichnet, daß** die Umstellung im Standard-bzw. Defaultzustand an zumindest drei der vier Konverterausgänge (27a bis 27c) durch Anlegen eines vom üblichen Signal, vorzugsweise Betriebsspannungssignal abweichenden Signals herbeiführbar ist.

7. Konverterschaltungen nach Anspruch 6, **dadurch gekennzeichnet, daß** das den Standard- bzw. Defaultzustand auslösende Spannungssignal, vorzugsweise Betriebsspannungssignal an zumindest drei der vier Konvertrausgänge (27a bis 27c) aus dem 0-Volt-Signal besteht.

8. Konverterschaltung nach einem der Ansprüche 1 bis 7, **dadurch gekennzeichnet, daß** an dem vierten Konverterausgang (27d) der Standard- bzw. Defaultzustand durch Anlegen eines Betriebsspannungsignals, vorzugsweise unter Abwesenheit eines zusätzlichen Steuerungssgnals (0 kHz) auslösbar ist.

9. Konverterschaltung nach einem der Ansprüche 3 bis 8, **dadurch gekennzeichnet, daß** jede der einem Konverterausgang (27a bis 27d) zugeordnete Bandbereichsumschalteinrichtung (35a bis 35d) sowie die dazu vorgesehene Umschaltlogik (39a bis 39d) unabhängig voneinander ansteuerbar sind.

## Claims

1. Quatro converter for reception of at least four reception levels, with the four reception levels to be received being produced at the four converter outputs (27a to 27d), to be precise one reception level at each respective converter output (27a to 27d), having the following features:
- the converter (1) has an integrated matrix circuit (1"),
- the converter (1) has a branching circuit (23a to 23d) and a switching device (37a to 37d), so that at least two or four subscribers at at least two or at all four converter outputs (27a to 27d) can selectively set and receive in each case one of the four reception levels individually and independently by switching of a first control signal between two supply voltages (13 volts and 18 volts) or by switching a further frequency-dependent control signal (0 kHz or 22 kHz), independently of the other connected subscribers, **characterized by** the following further features
- an additional circuit is provided, by means of which, when upgraded to form a multiple subscriber reception converter circuit for more than four subscribers, the four converter outputs (27a to 27d, 57a to 57d) are positively switched to a standard or default position, in which in each case one specific one of the four possible reception levels is associated with each of the four converter outputs (27a to 27d, 57a to 57d) and
- the additional circuit can be used to connect at least one or more switching matrices (55) with a standard association respectively at its four inputs (59a to 59d) and its four outputs (63a to 63d), forming a multiple subscriber reception converter circuit for more than four subscribers.

2. Converter circuits according to Claim 1, **characterized in that** the additional circuit comprises a coding plug (53) whose four inputs (54a to 54d) are electrically connected to the four outputs (27a to 27d) of the converter (1) such that in each case one specific one of the four possible reception levels is associated with each of the four converter outputs (57a to 57d) at the outputs (57a to 57d) of the coding plug (53), corresponding to the standard or default position, and in which case a switching matrix (55) can be connected to these four outputs (57a to 57d).

3. Converter circuits according to Claim 1 or 2, **characterized in that** the converter outputs (27a to 27d) have an associated band range switching device (35a to 35d) with switching logic (39a to 39d), in which case the association of the four reception levels with in each case one of the four converter outputs (27a to 27d) can be produced in the standard or default state.

4. Converter circuits according to one of Claims 1 to 3, **characterized in that** the process of switching to the standard or default, position in the converter (1) is carried out mechanically, preferably mechanically by fitting the coding plug (53).

5. Converter circuit according to one of Claims 1 to 3, **characterized in that** the process of switching the converter (1) to the standard or default state can be carried out electrically by supplying or not applying specific control signals (voltage and/or audio signals).

6. Converter circuits according to one of Claims 1 to 5, **characterized in that** the switching in the standard or default state to' at least three of the four converter outputs (27a to 27c) can be achieved by application of a signal which is not the same as the normal signal, and is preferably an operating voltage signal.

7. Converter circuits according to Claim 6, **characterized in that** the voltage signal which initiates the standard or default state, preferably an operating voltage signal at at least three of the four converter outputs (27a to 27c), is in the form of a 0-voltage signal.

8. Converter circuit according to one of Claims 1 to 7, **characterized in that** the standard or default state can be initiated at the fourth converter output (27d) by application of an operating voltage signal, preferably without any additional control signal (0 kHz).

9. Converter circuit according to one of Claims 3 to 8, **characterized in that** each of the band range switching devices (35a to 35d) which are associated with one converter output (27a to 27d), as well as the switching logic (39a to 39d) which is provided for this purpose, can be driven independently of one another.

## Revendications

1. Convertisseur à quatre sorties pour recevoir au moins quatre niveaux de réception, les quatre niveaux de réception à recevoir s'appliquant aux quatre sorties de convertisseur (27a à 27d), à savoir un niveau de réception à une sortie de convertisseur respective (27a à 27d), présentant les éléments suivants :
- le convertisseur (1) comprend un circuit matriciel intégré (1"),
- le convertisseur (1) comprend un circuit de ramification (23a à 23d) et un dispositif de commutation (37a à 37d), de sorte qu'au moins sur deux ou sur toutes les quatre sorties de convertisseur (27a à 27d), au moins deux ou quatre abonnés peuvent au choix régler et recevoir individuellement et indépendamment l'un des quatre niveaux de réception par commutation d'un premier signal de commande entre deux tensions d'alimentation (13 volt ou 18 volt) ou par commutation d'un autre signal de commande dépendant de la fréquence (0 kHz ou 22 kHz), indépendamment des autres abonnés branchés,
**caractérisé par** les autres éléments suivants :
- il est prévu un circuit additionnel au moyen duquel, lors de l'aménagement pour former un circuit convertisseur de réception pour abonnés multiples destiné à plus de quatre abonnés, les quatre sorties de convertisseur (27a à 27d, 57a à 57d) sont commutées à force vers une position standard ou position par défaut dans laquelle un niveau déterminé respectif parmi les quatre niveaux de réception possibles est associé à chacune des quatre sorties de convertisseur (27a à 27d, 57a à 57d), et
- au moyen du circuit additionnel, au moins une ou plusieurs matrices de commutation (55) présentant une association standard à leurs quatre entrées (59a à 59d) ou à leurs quatre sorties (63a à 63d) sont susceptibles d'être mises en circuit en formant un circuit convertisseur de réception pour abonnés multiples pour plus de quatre abonnés.

2. Convertisseur selon la revendication 1, **caractérisé en ce que** le circuit additionnel est constitué par une fiche de codage (53) dont les quatre entrées (54a à 54d) sont connectées électriquement aux quatre sorties (27a à 27d) du convertisseur (1), de sorte qu'aux sorties (57a à 57d) de la fiche de codage (53), en correspondance de la position standard ou position par défaut, un niveau déterminé respectif parmi les quatre niveaux de réception possibles est associé à chacune des quatre sorties de convertisseur (57a à 57d), une matrice de commutation (55) pouvant être branchée à ces quatre sorties (57a à 57d).

3. Convertisseur selon l'une ou l'autre des revendications 1 et 2,
**caractérisé en ce qu'**aux sorties de convertisseur (27a à 27d) est associé un dispositif de commutation de plage de bande (35a à 35d) avec une logique de commutation (39a à 39d), et l'association des quatre niveaux de réception à l'une des quatre sorties de convertisseurs (27a à 27d) peut être provoquée dans l'état standard ou état par défaut.

4. Convertisseur selon l'une des revendications 1 à 3, **caractérisé en ce que** la commutation vers la position standard ou position par défaut dans le convertisseur (1) s'effectue par voie mécanique, de préférence par voie mécanique par pose de la fiche de codage (53).

5. Convertisseur selon l'une des revendications 1 à 3, **caractérisé en ce que** la commutation du convertisseur (1) vers l'état standard ou état par défaut s'effectue par voie électrique par application ou non-application de signaux de commande déterminés (signaux de tension et/ou de tonalité).

6. Convertisseur selon l'une des revendications 1 à 5, **caractérisé en ce que** la commutation vers l'état standard ou état par défaut à au moins trois sorties parmi les quatre sorties de convertisseur (27a à 27c) s'effectue par application d'un signal qui diffère du signal habituel, de préférence du signal de tension de fonctionnement.

7. Convertisseur selon la revendication 6, **caractérisé en ce que** le signal de tension déclenchant l'état standard ou l'état par défaut, de préférence le signal de tension de fonctionnement à au moins trois sorties parmi les quatre sorties de convertisseur (27a à 27c) est constitué par le signal de 0 volt.

8. Convertisseur selon l'une des revendications 1 à 7, **caractérisé en ce qu'**à la quatrième sortie de convertisseur (27d), l'état standard ou l'état par défaut peut être déclenché par application d'un signal de tension de fonctionnement, de préférence en l'absence d'un signal de commande additionnel (0 kHz).

9. Convertisseur selon l'une des revendications 3 à 8, **caractérisé en ce que** chacun des dispositifs de commutation de plage de bande (35a à 35d) associés à une sortie de convertisseur (27a à 27d) ainsi que la logique de commutation (39a à 39d) prévue à cet effet peuvent être pilotés indépendamment les uns des autres.
